# EUROPEAN PATENT APPLICATION

(11) **EP 3 096 167 A1**
(43) Date of publication of application: **23.11.2016**
(21) Application number: 16169128.2
(22) Date of filing: 11.05.2016
(51) Int. Cl.: G02B 7/02, G02B 19/00, F21V 5/00

(54) **A METHOD OF PRODUCING LIGHTING DEVICES AND OPTICAL COMPONENT FOR USE THEREIN**

(30) Priority: 18.05.2015 IT UB20150668
(71) Applicant: OSRAM GmbH, 80807 München (DE); OSRAM S.P.A. - SOCIETA' RIUNITE OSRAM EDISON CLERICI, 20126 Milano (IT)
(72) Inventor: MASCOLO, Luca, I-31100 Treviso (IT); GRIFFONI, Alessio, I-30030 Fossò (Venezia) (IT); ZANON, Franco, I-36022 Cassola (Vicenza) (IT)
(74) Representative: Bosotti, Luciano

(57) **Abstract**

A method of producing lighting devices includes the use of a support structure (10) with a front surface having an array of electrically powered light radiation sources, e.g. LED sources, thereon and an optical component (16) including a coupling surface coupleable to the front surface of support structure (10), with an array of lenses (18) complementary to the array of light radiation sources (L) on the front surface of support structure (10). On the coupling surface of optical component (16) there is provided a network of channels (20) which extend along paths, the meshes of said network enclosing lenses (18) in the array of lenses (18). After coupling optical component (16) with support structure (10), with the lenses (18) facing said light radiation sources (L), a mass of sealing material is injected (N, 22) into said network of channels (20) by forming sealing formations (32), sealingly enclosing light radiation sources (L) and the lenses (18) facing the same.

## Description

### Technical Field

The present description relates to lighting devices.

One or more embodiments may refer to lighting devices employing electrically powered light radiation sources, e.g. solid-state light radiation sources such as LED sources.

### Technological Background

Lighting devices such as outdoor LED modules may meet requirements such as:
- high luminous flux (e.g. >10.000 lm);
- high power efficiency (e.g. >110 lm/W), which may imply the possible use of a high-efficiency (>90%) optical system, e.g. comprising lenses;
- protection from the outer environment (Ingress Protection, e.g. IP6x);
- modularity;
- low cost as regards both Bill of Materials (BoM) and manufacturing processes.

The fulfilment of such specifications may be a challenge.

In the case of LED modules employing lenses, IP protection may be provided by a manual or semiautomatic process, using glue or a gasket between each optical system and each Printed Circuit Board Assembly (PCBA) and/or the heatsink.

As regards manufacturing, however, resorting to such a solution may involve a rather long sealing step, which increases the overall cost of the final product.

This approach may also be disadvantageous for the installer / the end user, who may be forced to install each module separately, being it impossible to install several modules at the same time.

### Object and Summary

One or more embodiments aim at overcoming the previously outlined drawbacks.

According to one or more embodiments, said object is achieved thanks to a method having the features specifically set forth in the claims that follow.

One or more embodiments may also concern an optical component for use in said method.

The claims are an integral part of the technical teaching provided herein with reference to the embodiments.

One or more embodiments may achieve a manufacturing process adapted to be wholly automated, also as regards the dispensing of a sealing material and/or the possibility of keeping a high degree of modularity.

One or more embodiments may be used both for a lateral connection and for a vertical connection.

### Brief Description of the Figures

One or more embodiments will now be described, by way of non-limiting example only, with reference to the annexed Figures, wherein:
- Figure 1 shows a component for use in a method according to one or several embodiments;
- Figure 2 shows the possible coupling of the component in Figure 1 with an optical component according to one or more embodiments;
- Figures 3 and 4 show in greater detail features of the components of Figures 1 and 2;
- Figure 5 comprises seven parts respectively denoted as a) - g), exemplifying subsequent steps of a method according to one or more embodiments;
- Figure 6 shows in greater detail a result which may be achieved with the operation exemplified in Figure 5;
- Figure 7 shows a possible further step of a method according to one or more embodiments;
- Figure 8 shows a lighting device which may be implemented according to one or more embodiments;
- Figure 9 exemplifies a possible modification of an embodiment; and
- Figures 10 to 12 show various ways to use lighting devices, which may be implemented according to one or more embodiments.

It will be appreciated that, for ease of understanding, the views in the various Figures may not be drawn to the same scale.

### Detailed Description

In the following description, numerous specific details are given to provide a thorough understanding of one or more exemplary embodiments. One or more embodiments may be practiced without one or several specific details, or with other methods, components, materials, etc. In other instances, well-known structures, materials, or operations are not shown or described in detail to avoid obscuring various aspects of the embodiments.

Reference throughout this specification to "one embodiment" or "an embodiment" means that a particular feature, structure, or characteristic described in connection with the embodiment is included in at least one embodiment. Thus, the possible appearances of the phrases "in one embodiment" or "in an embodiment" in various places throughout this specification are not necessarily all referring to the same embodiment. Furthermore, particular features, structures, or characteristics may be combined in any suitable manner in one or more embodiments.

The headings provided herein are for convenience only, and therefore do not interpret the extent of protection or the scope of the embodiments.

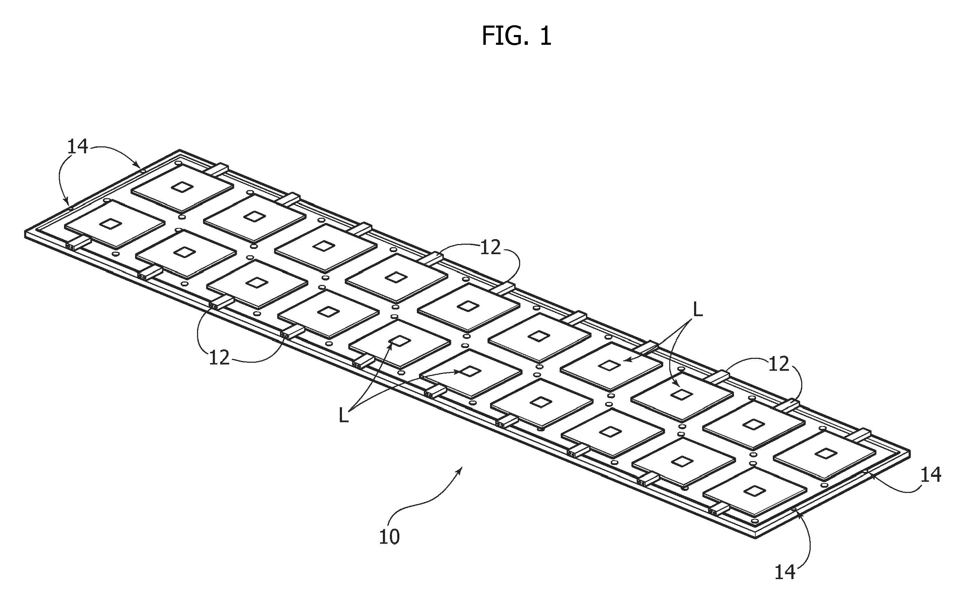

In Figure 1, reference 10 denotes a support structure for a lighting device comprising a substrate (which may consist of a Printed Circuit Board, PCB) having a general planar configuration (or in any case a general planar front surface, facing upwards in the Figure) on which there is arranged an array of electrically powered light radiation sources L. These sources may comprise e.g. solid-state light radiation sources, such as LED sources.

In the embodiment shown in Figure 1, such an array comprises two parallel rows, each including e.g. ten LEDs, the possibility being given for each source L to be surrounded by a slightly raised portion of the planar front surface of the substrate of support structure 10.

In any case, these options are not strictly mandatory.

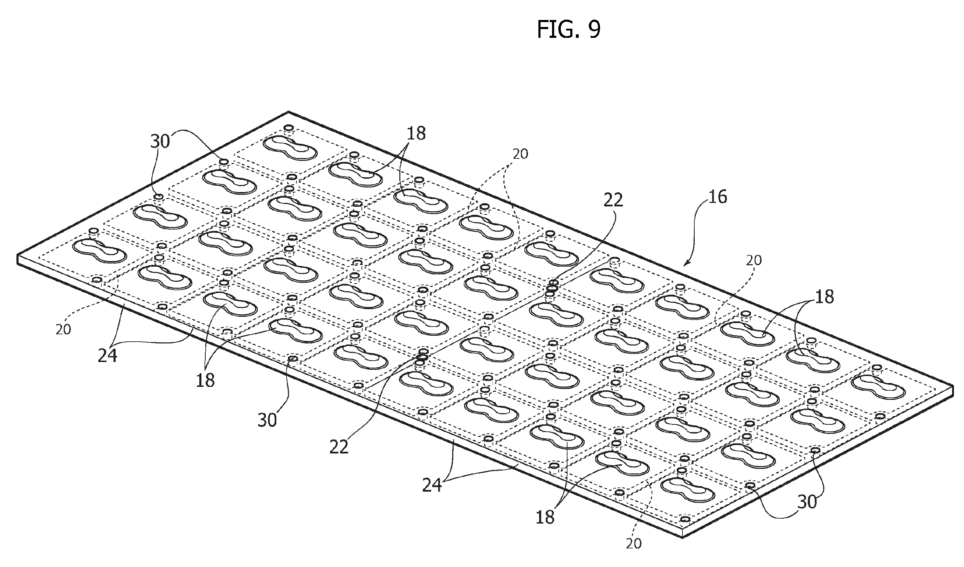

For example, as can be seen in Figure 9 (which refers, as will be seen in the following, to the possible presence of four rows of sources L), the number as well as the space arrangement of sources L may differ from what is exemplified herein.

For example, in one or more embodiments, the array of sources L may be a "non-matrix" array, i.e. a polygonal or circular array, etc., with a corresponding modification of the shape of the raised portion (the provision whereof is however optional) surrounding sources L.

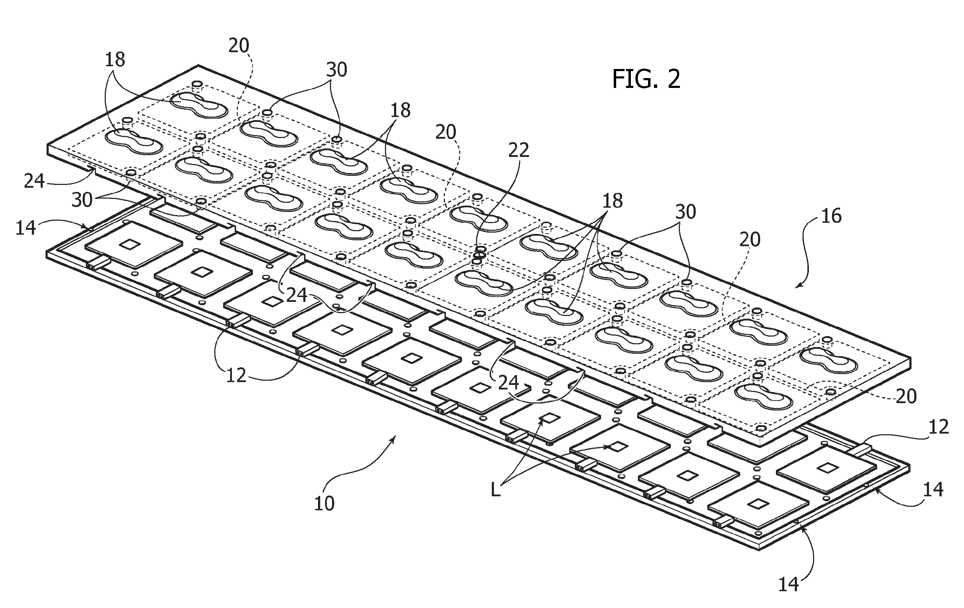

The view in Figure 2 exemplifies moreover the possible presence, on the periphery of structure 10, of (e.g. female) connectors 12, connected to electrically conductive lines, which are not visible in the Figure, which can be used for supplying power to sources L. In this regard it will be observed that, in one or more embodiments, light radiation sources L may be associated to electrical drive circuits which may be connected e.g. to connectors 12.

Structures of the previously outlined type may be implemented according to criteria known in the art, which makes it unnecessary to provide a more detailed description herein.

Figure 1, moreover, shows the possible presence within structure 10 of formations such as holes 14, adapted to act as centering formations.

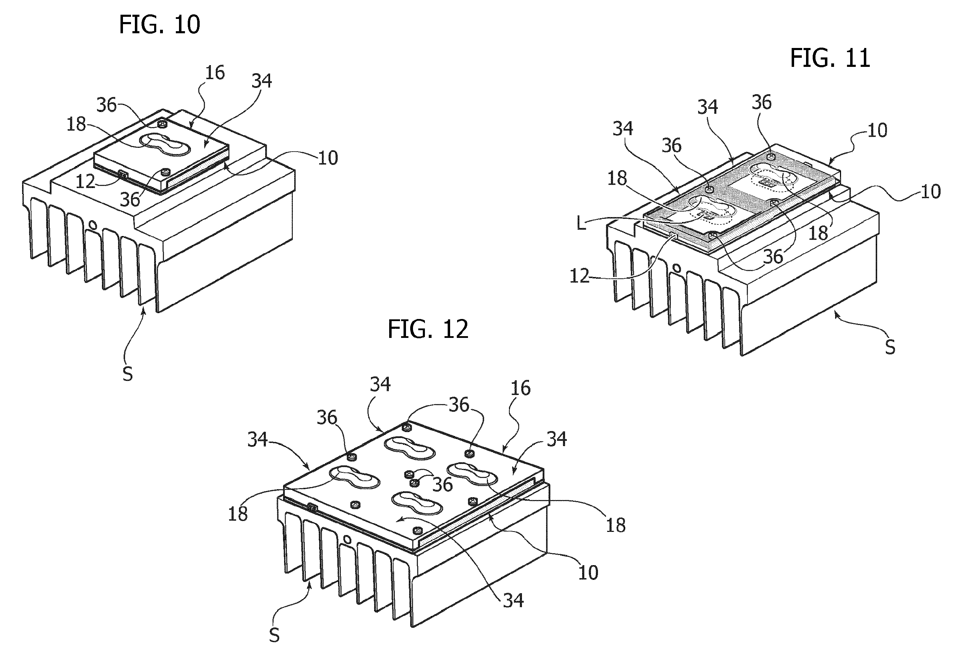

Such formations, the provision whereof is however not mandatory, may be useful when, as exemplified in Figure 10, structure 10 in Figure 1 is coupled to an optical component 16 having the features described in the following.

In one or more embodiments, component 16, which may obtained e.g. by moulding a transparent plastic material, may comprise a plate or in any case a body having a planar front surface, which may be applied against the planar front surface of the structure of Figure 1.

Component 16 is provided with an array of lenses 18, having an arrangement which corresponds to the array of light radiation sources L provided on the front face of support structure 10.

Therefore, when optical component 16 is coupled to support structure 10, bringing the coupling surface of component 16 facing the front surface of structure 10, the complementarity of both arrays (of light radiation sources L on one hand, and of lenses 18 on the other hand) causes each of the lenses 18 to face one light radiation source L.

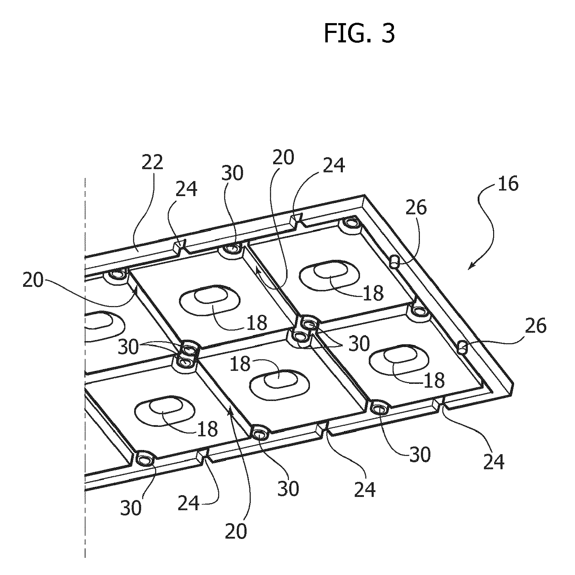

Figure 3 shows in greater detail the coupling source of component 16, which will be applied against the front surface of structure 10. It can be seen that, in one or more embodiments, said coupling surface of optical component 16 may be covered by a network of channels (grooves) 20 which are essentially similar to the grooves present on the coupling face of component 16.

In one or more embodiments, the network of channels 20 comprises channels extending along paths which enclose lenses 18 of the array provided on optical component 16.

For example, channels 20 may form a grid or network (e.g. a rectangular network of square cells) in such a way that each lens 18 is enclosed by a mesh of said network of channels, so that each lens 18 is completely surrounded by a (closed) mesh of said network or grid.

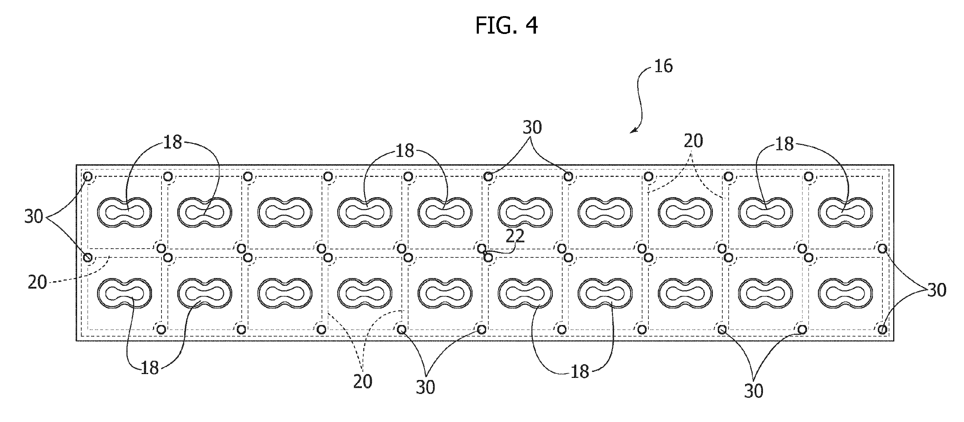

Figure 4 is a plan view of optical component 16 viewed from the face which will be turned towards the outside of the lighting device obtained through the use of component 16. Figure 4 highlights the possible provision, in one or more embodiments, of at least one hole 22 communicating with the network of channels 20, by being in communication therewith.

Although in one or more embodiments as exemplified in Figure 4 one single hole 22 may be provided, one or more embodiments may comprise the presence of several holes 22 distributed on the component 16: in this regard see e.g. Figure 9, wherein two such holes are provided.

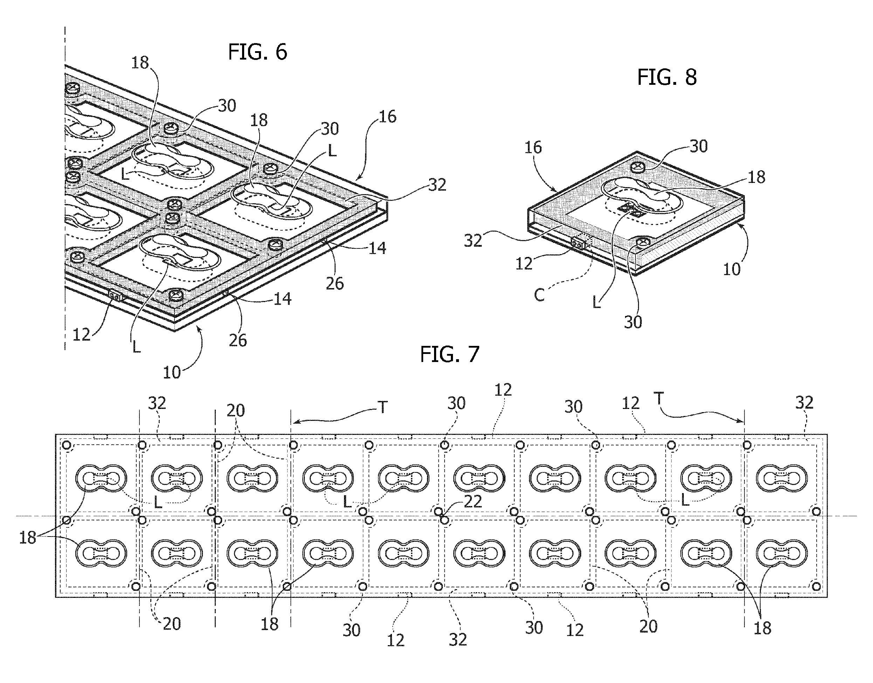

The view in Figure 3 exemplifies moreover that, in one or more embodiments, the presence of channels 20 may form, along the periphery of component 16, a frame provided with hollows or notches 24 which may be traversed by connectors 12, the latter being adapted to receive plug elements C (see Figure 8).

Figure 3 moreover shows the possible provision on component 16, in one or more embodiments, of formations such as pins 26, which are adapted to cooperate, as centering formations, with holes 14 arranged at complementary positions on support structure 10 when component 16 is coupled with structure 10.

In Figure 3, moreover, the possibility is shown of providing, in component 16, in one or more embodiments, tubular pins (bushes) 30, which are arranged e.g. at corner positions (e.g. at opposed corners) with respect to the meshes of the network of channels 20.

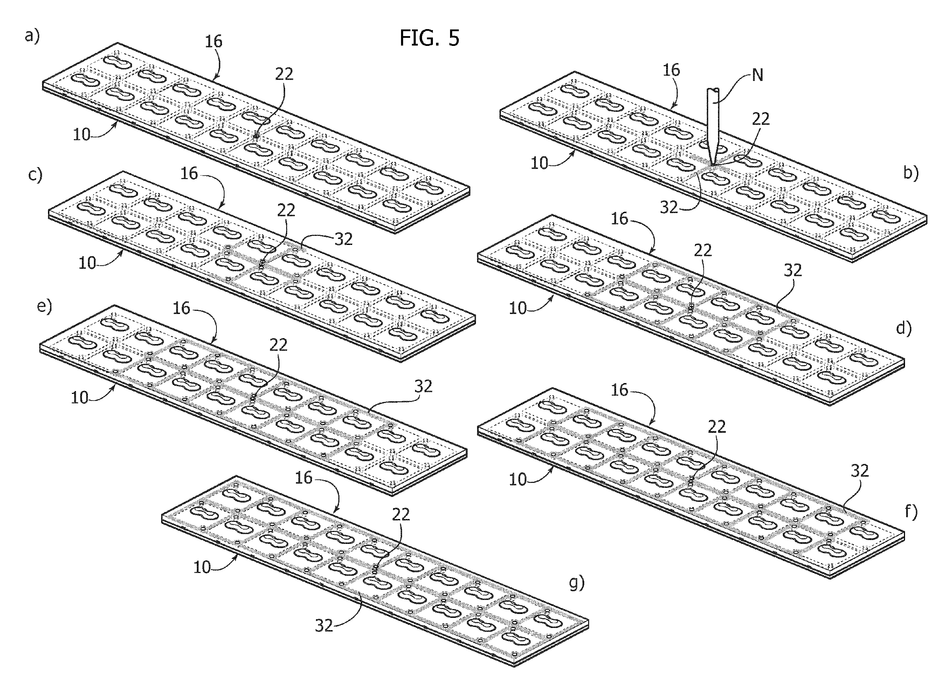

Once achieved the coupling position between support structure 10 and optical component 16, as exemplified in part a) of Figure 5, the coupling surface of component 16 resting on the front surface of structure 10, through aperture(s) 22 it is possible to inject a sealing material, such as an adhesive, into the network of channels 20 (e.g. via a nozzle N which for clarity is only shown in portion b) of Figure 5).

In one or more embodiments, the adhesive may consist of a silicone-based glue, a polymer-based plastic material (e.g. polyurethane or vynilic glue) or a bicomponent adhesive material (base glue and activator).

As can be seen by observing in sequence portions b) to g) in Figure 5, the injection of such a sealing material may proceed until all channels 20 are filled. In this way, in one or more embodiments a grid or network of sealing material 32 may be implemented which comprises (in the presently exemplified embodiment, square) meshes, each sealingly enclosing one of the light radiation sources L which are mounted on structure 10, and a corresponding lens 18 provided in optical component 16. The sealing mass 32 may also fill the grooves provided between the raised portions which may be present in structure 10 around sources L.

Such a result can be better appreciated in the view of Figure 6, which also highlights the possible function performed by centering formations 14 and 26.

The view of Figure 6 also highlights that connectors 12, facing hollows or notches 24 (see e.g. Figures 2 and 3) extend through sealing material 32 and project towards the outside.

Figure 6, moreover, shows that light radiation sources L may comprise, in one or more embodiments, an array of several individual LEDs and moreover that, optionally, channels 20 may be implemented so that one or more meshes in the network of sealing material 32 enclose not only one source L and lens 18 facing the same (as exemplified in Figure 6), but a plurality of light radiation sources L and lenses 18 associated thereto.

In one or more embodiments, the length of pins or bushes 30 may be chosen so that, with the optical component 16 coupled with support structure 10, the "distal" end of pins 30 abuts against the front surface of structure 10.

Accordingly, the axial holes provided in such pins 30 and the optional apertures provided at corresponding positions in support structure 10 (see for example Figure 1), for example in order to allow for the insertion of fixation screws (see for example reference 36 in Figures 10 to 12) are isolated from channels 20 and are not flooded with sealing material.

In one or more embodiments, sealing material 32 may be comprised of a curable material. In such a case, after completion of channels 20 (as exemplified in portion g) of Figure 5 and Figure 6), the thus obtained assembly may be subjected to a curing treatment (e.g. hot curing).

Irrespective of the need to cure the sealing material injected into channels 20, as exemplified in Figure 7 a cutting operation may be performed, e.g. through a laser beam, along at least a few sealing lines formed by material 32 (see e.g. the lines denoted as T in Figure 7), i.e. along at least one of channels 20, so as to divide the previously obtained assembly into individual lighting devices as exemplified in Figure 8.

In one or more embodiments, the lighting device 34 may comprise:
- a portion of support structure 10 mounting at least one light radiation source L,
- a portion of optical component 16 being coupled to said portion of support structure 10, and comprising at least one lens 18 facing said light radiation source L.

Such an assembly is sealed from the outside by a "kerb" of sealing material 32, sealingly closing the thus obtained lighting device 34.

Said kerb is (sealingly) traversed by a respective connector 12, which penetrates a hollow 24 of optical component 16 in order to be coupled with a plug connector C (the shape whereof is drawn in Figure 8). In one or more embodiments, the sealing action may be moreover strengthened by arranging a further amount of sealing material around the area wherein plug connector C is coupled onto connector 12.

The dividing operation as exemplified in Figure 7 (dashed lines T) is not however mandatory: in one or more embodiments, actually, it is possible to keep a plurality of lighting devices 34 (e.g. an array of 2 X N light radiation sources L) coupled together, so as to originate a lighting device comprising a plurality of light radiation sources L, in a number which may be equal to or different from sources L mounted on structure 10 to perform the previously described operations.

Figure 9 exemplifies the possibility of extending the previously exemplified criteria to an optical component 16 which, in comparison to what shown in Figures 2 to 7, comprises a different number of lenses 18 (four arrays of ten lenses, instead of two arrays of ten lenses).

Moreover, Figures 10 to 12 exemplify the flexibility of use of one or more embodiments, e.g. as regards the possible mounting onto a heatsink S, optionally a finned heatsink.

Specifically, Figure 10 exemplifies the mounting on a heatsink S of a "single" lighting device 34, which is basically similar to the device shown in Figure 8.

Figure 11 refers to the possible mounting on heatsink S of a "tandem" lighting device comprising two devices 34 connected to each other; for example, the two devices 34 visible in Figure 11 may be obtained from a structure as exemplified in Figure 7, by subjecting such a structure to a cutting operation T, so as to bring about the separation from such a structure of a "column" (i.e. the rightmost column in Figure 7) of the matrix array of such a structure.

Figure 12 refers to the exemplary possibility to mount on a heatsink S four lighting devices 34, each corresponding to the solution exemplified in Figure 8.

As in the case of the "tandem" devices of Figure 11, also the four devices 34 in Figure 12 share a common portion of structure 10, coupled to a common portion of optical component 16.

In one or more embodiments, device (s) 34 may be mounted on a support such as a heatsink S, e.g. by a screw connection via screws 36 which are adapted to advance, for example, in axial holes of pins 30, which are visible in Figures 3 and 4 in the board of structure 10.

Of course, without prejudice to the basic principles, the implementation details and the embodiments may vary, even appreciably, with respect to what has been described herein by way of non-limiting example only, without departing from the extent of protection.

The extent of protection is defined by the annexed claims.

## Claims

1. A method of producing lighting devices (34), including:
- providing a support structure (10) with a front surface with an array of electrically powered light radiation sources (L),
- providing an optical component (16) with a coupling surface coupleable to the front surface of said support structure (10) and with an array of lenses (18) complementary to the array of light radiation sources (L) on the front surface of the support structure (10); the coupling surface of the optical component (16) having a network of channels (20) provided thereon with the meshes of said network enclosing the lenses (18) in said array of lenses,
- coupling said optical component (16) with said support structure (10) by arranging said coupling surface on said front surface with the lenses (18) in said array of lenses facing said light radiation sources (L) of said support structure (10), and
- injecting (N, 22) a mass of sealing material into said network of channels (20) by forming sealing formations (32) sealingly enclosing said light radiation sources (L) of said support structure (10) and the lenses (18) of said optical element (16) facing said light radiation sources (L).

2. The method of claim 1, including:
- selecting said sealing material as a curable material, and
- curing said sealing material after injecting (N, 22) said mass of sealing material (32) into said network of channels (20).

3. The method of claim 1 or claim 2, including cutting (T) said support structure (10) and said optical component (16) coupled therewith with said mass of sealing material (32) injected in said network of channels (20) along at least one of said channels (20) to produce individual lighting devices (34) including:
- a portion of said support structure (10) with at least one light radiation source (L),
- a portion of said optical component (16) coupled with said portion of said support structure (10) with at least one lens (18) facing said at least one light radiation source (L) on said portion on said support structure (10), and
- a sealing formation (32) of said sealing material sealingly enclosing said portion of said support structure (10) and said portion of said optical component (16) coupled therewith.

4. The method of claim 3, including cutting (T) said support structure (10) and said optical component (16) coupled therewith with said mass of sealing material (32) injected in said network of channels (20) along at least one of said channels (20) to produce individual lighting devices (34) including:
- a portion of said support structure (10) with a plurality of light radiation sources (L),
- a portion of said optical component (16) coupled with said portion of said support structure (10) with a plurality of lenses (18) facing said plurality of light radiation sources (L) on said portion on said support structure (10), and
- sealing formations (32) of said sealing material sealingly enclosing said plurality of light radiation sources (L) on said portion of said support structure (10) and said plurality of lenses (18) on said portion of said optical component (16) facing said plurality of light radiation sources (L) on said portion on said support structure (10).

5. The method of any of the previous claims, including providing in said optical component (16) at least one aperture (22) for injecting said mass of sealing material into said network of channels (20).

6. The method of any of the previous claims, including providing said support structure (10) and said optical component (16) complementary centering formations (14, 26) for coupling said optical component (16) with said support structure (10).

7. The method of any of the previous claims, including providing along the periphery of said optical component (16) passageways (24) for electrical connectors (12) of said light radiation sources (L) on said support structure (10).

8. The method of any of the previous claims, including providing said network of channels (20) as a matrix-like pattern of channels on said coupling surface of said optical component (16).

9. The method of any of the previous claims, including providing said array of light radiation sources (L) of said support structure (10) and said array of lenses (18) of said optical component (16) as matrix arrays.

10. The method of any of the previous claims, including providing one (16) of said optical component (16) and said support structure (10) with tubular passage pins (30) for fixing formations (36), said tubular pins (30) being adapted to abut against the other (10) of said optical component (16) and said support structure (10), whereby said tubular pins (30) are isolated with respect to said network of channels (20) and are not filled by said mass of sealing material injected into said network of channels (20).

11. An optical component (16) for use in the method of any of claims 1 to 10, the component including a coupling surface coupleable to the front surface of said support structure (10) and an array of lenses (18) complementary to the array of light radiation sources (L) on the front surface of the support structure (10); the coupling surface of the optical component (16) having a network of channels (20) provided thereon with the meshes of said network enclosing the lenses (18) in said array of lenses.
